# FASCICULE DE BREVET EUROPEEN

(11) **EP 1 613 864 B1**
(45) Date de publication et mention de la délivrance du brevet: **14.10.2015**
(21) Numéro de dépôt: 03816676.5
(22) Date de dépôt: 11.04.2003
(51) Int. Cl.: F04D 25/06, F04D 29/58

(54) **GROUPE MOTO-COMPRESSEUR CENTRIFUGE**
MOTORRADIALVERDICHTEREINHEIT
CENTRIFUGAL MOTOR-COMPRESSOR UNIT

(43) Date de publication de la demande: 11.01.2006
(73) Titulaire: Thermodyn, 92400 Courbevoie (FR)
(72) Inventeur: LABOUBE, Pierre, F-71200 Saint Sernin-du-Bois (FR); FRIEZ, Patrick, F-71200 Le Creusot (FR); PUGNET, Jean-Marc, F-71200 Le Creusot (FR); BONNEFOI, Patrice, 69130 Ecully (FR)
(74) Mandataire: Casalonga, Axel
(86) Numéro de dépôt international: PCT/FR2003/001163
(87) Numéro de publication internationale: WO 2004/094833

(56) Documents cités:
- WO-A-02/099286
- US-A- 4 969 803
- US-A- 5 980 218
- US-B1- 6 390 789

## Description

L'invention concerne un groupe compresseur centrifuge.

Plus particulièrement, l'invention concerne un groupe compresseur centrifuge de type intégré, c'est-à-dire dans lequel le compresseur et un moyen moteur d'entraînement du compresseur sont montés dans un carter commun étanche au gaz manipulé par le compresseur.

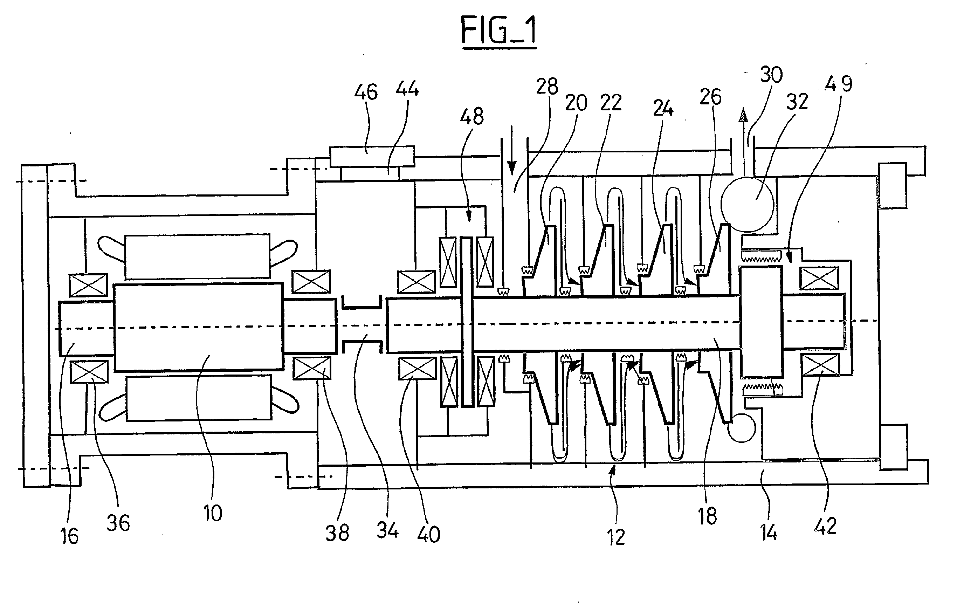

En se référant à la figure 1, un groupe compresseur intégré conventionnel comporte un moyen moteur, constitué généralement par un moteur d'entraînement électrique, désigné par la référence numérique générale 10 et un compresseur centrifuge 12 comportant par exemple plusieurs étages de compression, l'ensemble étant monté dans un carter commun étanche au gaz manipulé par le compresseur.

Comme on le voit sur cette figure 1, le moteur 10 entraîne en rotation un rotor 16 entraînant lui-même en rotation un arbre mené 18 supportant un ensemble de roues à aubes de compression 20, 22, 24 et 26.

Dans l'exemple de groupe compresseur illustré à la figure 1, le compresseur comporte quatre étages de compression qui assurent conjointement la compression d'un gaz aspiré par une conduite d'amené 28 pour le délivrer en sortie 30 en passant par une volute 32.

Le rotor 16 et l'arbre mené 18 sont reliés par l'intermédiaire d'un accouplement flexible 34. Dans ce cas, le rotor 16 et l'arbre mené 18 sont chacun supportés par des paliers radiaux 36, 38, 40 et 42. Une ouverture 44 ménagée dans le carter 14 et obturée par un moyen d'obturation 46 permet l'accès à l'accouplement flexible 34 pour le montage du compresseur.

On voit enfin sur la figure 1 qu'une butée axiale 48 limite le déplacement axial de l'arbre mené 18, tandis qu'un piston d'équilibrage 49 permet d'équilibrer la pression axiale appliquée sur l'arbre mené au cours du fonctionnement du groupe compresseur.

La réalisation d'un groupe compresseur sous la forme d'un moteur et d'un compresseur disposés dans un carter commun étanche sous pression permet d'éliminer les garnitures d'étanchéité du compresseur, qui sont des éléments susceptibles de compromettre la fiabilité du groupe compresseur et d'être la source d'effluents gazeux dans l'atmosphère. Dans ce cas, le moteur est disposé au sein même du gaz manipulé par le compresseur. Afin d'éviter un accroissement trop important des pertes mécaniques du moteur par ventilation, le moteur est agencé de sorte qu'il se situe à la pression d'aspiration du compresseur. Il est ainsi nécessaire de prévoir une circulation du gaz dans le moteur afin d'évacuer les pertes, c'est-à-dire dans le stator pour évacuer les pertes par effet joule dans les bobinages, et dans l'entrefer entre le rotor et le stator pour évacuer les pertes par ventilation et les pertes par courant de Foucault dans la rotor.

C'est pourquoi, les groupes compresseurs centrifuges sont généralement dotés de moyens de refroidissement du moyen moteur et des paliers de guidage par prélèvement de gaz en sortie du premier étage de compression pour procéder au refroidissement du moteur et des paliers. On pourra à cet égard se référer aux documents EP-A-1 069 313 et US 6,390,789, qui décrivent différents types de groupes moto-compresseur dans lesquels le moteur et les paliers sont refroidis par prélèvement de gaz de refroidissement en sortie du premier étage de compression.

Cependant, ce type de technique de refroidissement présente un certain nombre d'inconvénients majeurs, notamment en raison du fait qu'elle ne permet pas un refroidissement optimal du moteur et des paliers.

Le Brevet US-A-4969803 divulgue un groupe compresseur centrifuge muni d'un moteur, avec des étages de compression et des paliers de guidage axial et radial. Une partie du flux du gaz de refroidissement est prélevée à l'entrée d'un étage de compression par une canalisation externe au compresseur qui achemine ce flux de façon distincte vers le moteur et les paliers de guidage. Mais ce flux n'est pas prélevé au premier étage de compression et doit être refroidi par un liquide extérieur au compresseur.

Le but de l'invention est de pallier ces inconvénients et de fournir un groupe moto-compresseur présentant des moyens de refroidissement améliorés.

L'invention a donc pour objet un groupe compresseur centrifuge, du type comprenant un moyen moteur entraînant en rotation un rotor et au moins un compresseur comprenant un corps statorique et ensemble de roues à aubes montées sur un arbre mené entraîné en rotation par le rotor dans le corps statorique, l'ensemble constitué par le moteur et le ou chaque compresseur étant monté dans un carter commun étanche au gaz manipulé par le groupe compresseur, le groupe compresseur comportant en outre un ensemble de paliers actifs de guidage axial et radial du rotor et de l'arbre mené et des moyens de refroidissement du moyen moteur et des paliers de guidage par prélèvement du gaz manipulé par le compresseur en sortie d'un premier étage de compression, permettant le passage dudit gaz à travers le moyen moteur et à travers les paliers et réinjection du gaz en entrée du compresseur.

Selon une caractéristique générale de ce groupe compresseur centrifuge, les moyens de refroidissement comportent en outre un ensemble de canalisations externes recueillant le gaz en sortie d'un étage de compression, le flux de gaz de refroidissement dans le moyen moteur étant distinct du flux de gaz de refroidissement dans les paliers.

De plus, selon l'invention, les canalisations externes alimentent en parallèle des conduits internes radiaux d'alimentation du moteur et des paliers en gaz de refroidissement disposés dans le groupe compresseur. Les flux de gaz de refroidissement des paliers et du moteur convergent dans une cavité où ils sont récupérés par un canal central globalement longitudinal et amenés dans une conduite d'amenée en amont du premier étage de compression.

Il a été constaté qu'un tel agencement permet d'améliorer considérablement le refroidissement au sein du groupe compresseur. En effet, il a été constaté que la taille de l'entrefer des paliers magnétiques par rapport à la taille de l'entrefer du moteur nuit à la réfrigération lorsque que l'on utilise le même flux pour le refroidissement des paliers et du moteur, en empêchant une circulation correcte du gaz de refroidissement. En effet, le moteur génère des pertes plus importantes que les paliers et nécessite dès lors un débit plus important. De même, la température du gaz de refroidissement en sortie du moteur nuit au refroidissement des paliers lorsque l'on utilise le flux de gaz de refroidissement en sortie du moteur pour le refroidissement des paliers.

De préférence, les moyens de refroidissement sont équipés de moyens de filtrage du gaz manipulé par le compresseur.

Selon une autre caractéristique du groupe compresseur selon l'invention, l'arbre mené du compresseur est supporté par deux paliers radiaux d'extrémité, les moyens de refroidissement comportent un conduit axial s'étendant d'un palier à l'autre et alimenté à l'une de ses extrémités par les canalisations externes, ledit conduit axial s'étendant globalement longitudinalement de manière radialement externe dans le compresseur.

Par exemple, les conduits internes d'alimentation des paliers comportent un ensemble de conduits orientés de manière radialement externe dans le compresseur et alimentant chacun un palier.

Selon encore une autre caractéristique de l'invention, le moteur est alimenté en gaz de refroidissement par l'intermédiaire d'un orifice ménagé dans un couvercle d'extrémité et en communication avec une canalisation externe.

Le flux de gaz de refroidissement peut être mélangé au flux de gaz de refroidissement en sortie des paliers refroidis par le gaz issu des conduits internes.

Par exemple, le groupe moto-compresseur comporte des moyens de réglage du débit de réfrigération d'une part pour le moteur et, d'autre part, pour chaque palier.

Selon une autre caractéristique de l'invention, le groupe compresseur comporte des moyens de collecte de flux de gaz de refroidissement d'organes situés du côté d'un piston d'équilibrage.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1, dont il a déjà été fait mention, illustre la structure générale d'un groupe moto-compresseur intégré conventionnel ;
- la figure 2 est un schéma synoptique d'un groupe compresseur centrifuge conforme à l'invention ;
- la figure 3 illustre un mode de réalisation d'un groupe compresseur centrifuge conforme à l'invention ;
- la figure 4 illustre un mode de réalisation d'un groupe compresseur réalisé conformément à l'enseignement de l'invention ;
- la figure 5 illustre un autre mode de réalisation d'un groupe compresseur réalisé conformément à l'enseignement de l'invention ; et
- la figure 6 illustre encore un autre exemple de réalisation d'un groupe compresseur réalisé conformément à l'enseignement de l'invention.

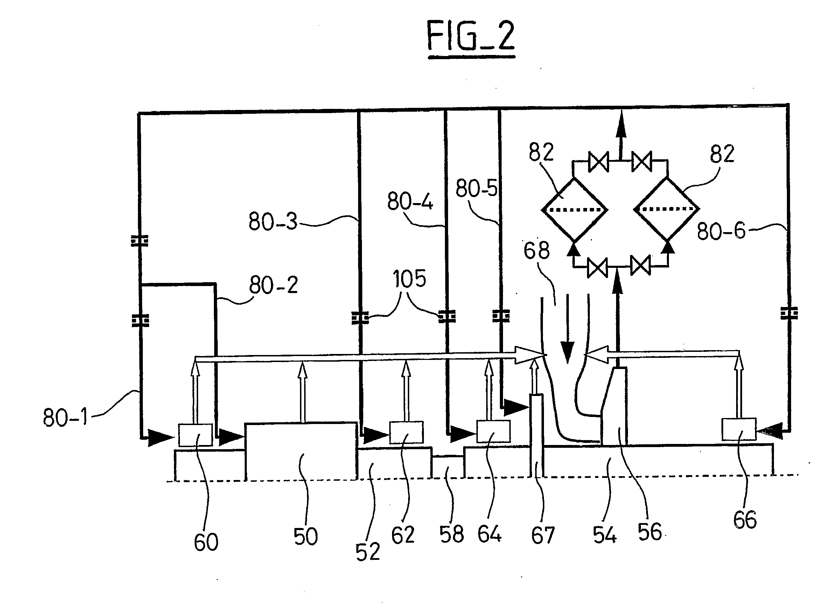

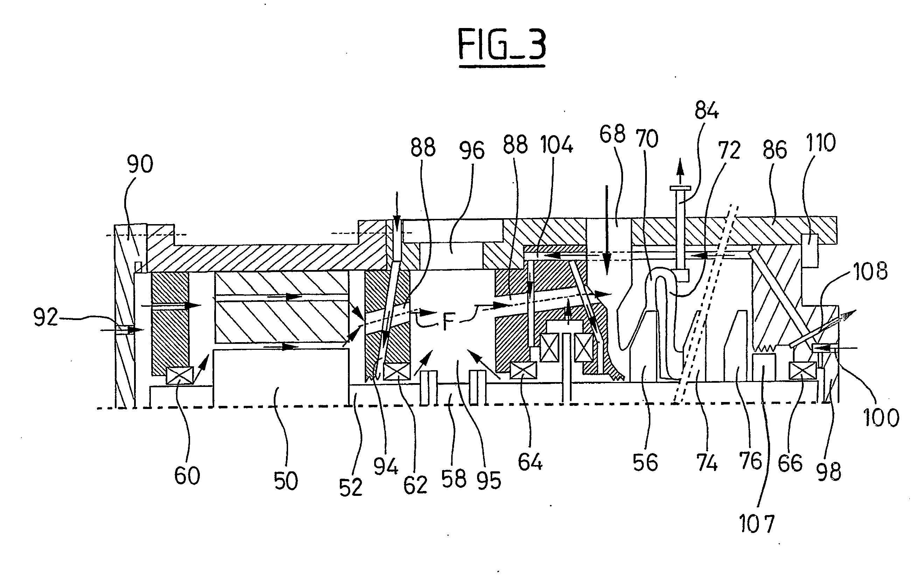

En référence à la figure 2, on va maintenant décrire le principe général de réalisation d'un groupe compresseur conforme à l'invention. Sur cette figure 2, seul un étage de compression a été représenté par soucis de clarté, les autres étages de compression n'ayant pas été représentés. On conçoit cependant qu'il peut être pourvu d'un nombre quelconque d'étages de compression, comme cela sera mentionné par la suite en référence aux figures 3 à 6.

Le groupe compresseur illustré sur cette figure 2 comporte un moyen moteur 50, constitué par exemple par un moteur électrique à grande vitesse variable entraînant en rotation un rotor 52, entraînant lui-même à vitesse identique un arbre mené 54 sur lequel est montée une roue à aubes 56. Le rotor 52 et l'arbre mené 54 sont reliés par un accouplement flexible 58. Dès lors, le rotor 52 et l'arbre mené 54 sont chacun supportés par deux paliers radiaux d'extrémité, respectivement 60, 62 et 64, 66. Une butée 67 limite le déplacement axial du rotor 54 lors du fonctionnement du compresseur engendré par l'apparition d'efforts axiaux dus à l'apparition d'une pression différentielle de part et d'autre de la roue à aubes 56.

La roue à aubes 56 aspire un gaz comprimé délivré à partir d'une conduite d'amené 68 pour provoquer un accroissement de sa pression statique ainsi qu'une augmentation de son énergie cinétique. Un diffuseur 70 (figure 3) ralentit le gaz issu de la roue à aubes 56 pour accroître sa pression. En aval, un canal de retour 72 conduit le gaz vers des étages de compression 74, ...76 disposés en aval.

Comme on le voit sur les figures 2 et 3, afin de refroidir le moteur 50 ainsi que les paliers 60, 62, 64 et 66 et la butée 67 de limitation du déplacement axial du rotor 50, une partie du gaz en sortie du premier étage 56 de compression est prélevée et est utilisée en tant que gaz de refroidissement.

Ces différents éléments, à savoir le moteur, les paliers et la butée sont refroidis en utilisant des flux de gaz de refroidissement distincts, c'est-à-dire en parallèle, délivrés par des conduits 80-1, 80-2,..., 80-6 faisant partie d'un ensemble de canalisations externes recueillant le gaz en sortie du premier étage de compression 56, après passage à travers un ensemble de cartouches de filtrage, telles que 82. Comme on le conçoit, cet agencement, selon lequel le moteur, d'une part, et les paliers, d'autre part, sont alimentés en parallèle selon des flux de refroidissement distincts, permet de s'affranchir des contraintes liées à la taille de l'entrefer des paliers magnétiques, d'une part, et du moteur, d'autre part.

Comme on le voit sur la figure 3, selon un exemple de réalisation, la partie statorique du compresseur comporte une tubulure 84 recueillant le fluide en sortie du diffuseur 70, laquelle traverse l'enveloppe 86 du compresseur. Pour le refroidissement proprement dit du moteur et des paliers, le groupe motocompresseur comporte un ensemble de conduits internes d'alimentation alimentés respectivement à partir des conduites externes 80-1,..., 80-6. Après passage à travers le moteur et les paliers, le gaz de refroidissement est recueilli par un canal central 88 globalement longitudinal, lequel débouche dans la conduite d'amené 68, en amont du premier étage de compression 56.

Pour le refroidissement du moteur 50 et des paliers d'extrémité 60 et 62 supportant le rotor 52, le couvercle d'extrémité 90 correspondant enfermant l'enveloppe 86 est pourvu d'un orifice 92, lequel communique avec la conduite externe 80-1 correspondante. Une partie de ce flux de refroidissement est utilisé pour le refroidissement du palier 60. Ce flux est ensuite récupéré pour le refroidissement du moteur, par passage à travers l'entrefer du moteur. Une autre partie de ce flux est directement utilisé pour le refroidissement du moteur.

Un deuxième conduit interne 94 est alimenté à partir des canalisations externes pour le refroidissement du deuxième palier 62 du moteur.

En aval, le flux de gaz de refroidissement servant au refroidissement des paliers 60 et 62 et du moteur 50, est récupéré dans une cavité 95 dans laquelle est disposé l'accouplement flexible 58 et qui est obturé par un moyen d'obturation étanche 96.

En aval, comme représenté par les flèches F, le gaz est récupéré par le conduit interne 88 pour être réinjecté en amont du premier étage de compression 56.

Par ailleurs, les paliers et la butée sont refroidis à partir d'un flux de gaz de refroidissement délivré à travers un couvercle d'extrémité 98 obturant l'extrémité correspondante de l'enveloppe 86. On voit en effet sur cette figure que ce couvercle 98 est pourvu d'un orifice 100, lequel communique avec une conduite externe 80-6 correspondante. Ce flux de gaz de refroidissement refroidit, d'une part, le palier d'extrémité 66 situé du côté de ce couvercle 98 et le palier d'extrémité opposé 64, par l'intermédiaire d'une conduite axiale 104, qui s'étend longitudinalement de façon radialement externe entre ces paliers 64 et 66, à travers les éléments de stator du compresseur. Cette conduite axiale est également conformée de manière à refroidir également la butée 78. Le flux de gaz est alors réinjecté dans le conduit 88.

On notera que le soutirage du gaz de refroidissement en sortie du premier étage de compression permet de prélever un gaz moins chaud que s'il avait été pris au niveau de la sortie du compresseur, rendant la réfrigération plus efficace, tout en limitant la puissance de compression qu'il faut développer pour élever le niveau de pression de ce gaz.

De plus, ce prélèvement représente une source d'alimentation autonome dès que le moteur est mis en route, des moyens 105 de réglage de débit de réfrigération pour le moteur, d'une part et pour chacun des paliers, d'autre part, étant prévus pour créer des pertes de charge adéquates et contrôlées dans les canalisations externes. Ces moyens de réglage peuvent être actifs, de type vanne régulatrice, ou passifs, de type orifice fixe.

On notera que dans l'exemple de réalisation illustré à la figure 3, l'aspiration du gaz dans le compresseur est disposée du côté du moteur électrique. Le principe de refroidissement décrit précédemment peut également s'appliquer à un agencement dans lequel le refoulement du compresseur est disposé du côté du moteur. Dans ce cas, c'est le flux de gaz de réfrigération issu du moteur ou, de manière générale d'organes situés du côté du piston d'équilibrage 107, qui est mélangé avec le flux de gaz issu de ce piston d'équilibrage 107 pour être ensuite injecté dans la conduite d'amené 68 par une canalisation d'équilibrage 108.

Pour la maintenance, le moyen d'obturation étanche 96 permet l'accès à l'accouplement flexible 58. L'extraction du rotor du moteur se fait, quant à elle, en démontant le couvercle d'extrémité 90, lequel est par exemple boulonné sur l'enveloppe. Le démontage de la partie interne du compresseur est, quant à lui, réalisé en extrayant le couvercle 98 correspondant, lequel est par exemple fixé sur l'enveloppe par un anneau de cisaillement 110. De préférence, l'ensemble est agencé de manière que l'assemblage rotor-diaphragmes, c'est-à-dire l'ensemble du compresseur, puisse être retiré de l'enveloppe en même temps que le couvercle 98 sans avoir à désolidariser l'enveloppe de son socle et des tuyauteries de gaz de procédé et des canalisations de refroidissement. On notera que, pendant ces phases de montage-démontage, les rotors reposent sur leur palier, ce qui facilite les opérations d'accouplement-désaccouplement, sans risque d'endommagement des pièces tournantes et des pièces statoriques qui pourraient sinon entrer en contact avec les rotors au cours de ces opérations.

On notera enfin que l'invention n'est pas limitée aux modes de réalisation décrits.

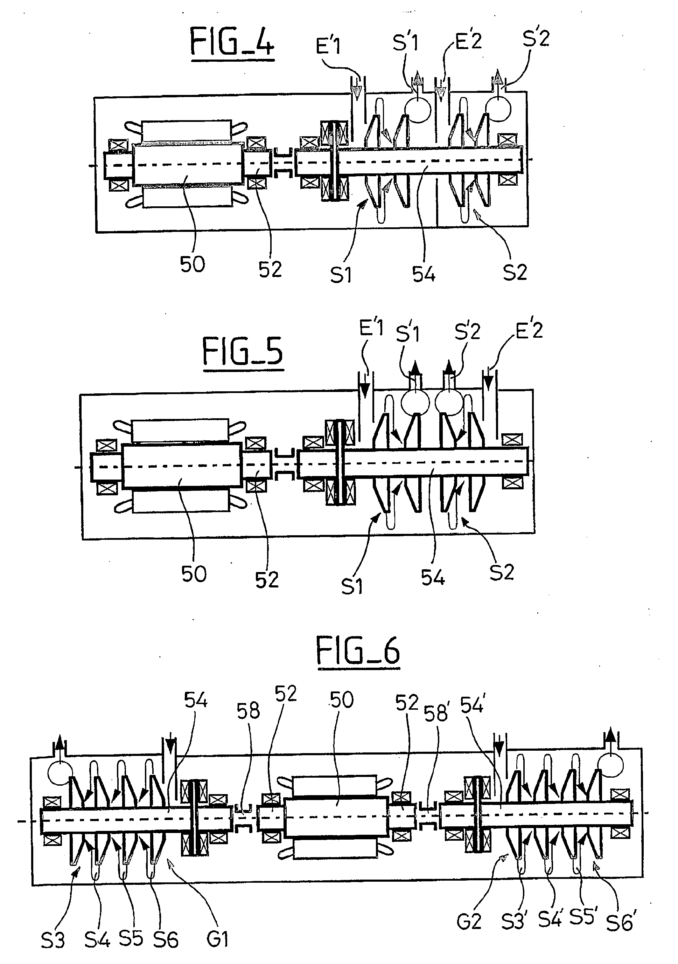

En effet, alors que sur les figures 2 et 3 on a représenté un groupe compresseur centrifuge muni d'un compresseur multiétagé intégré en ligne à une seule section de compression à plusieurs étages, l'invention s'applique également à d'autres types de groupes compresseurs, par exemple à deux sections S1 et S2 en ligne, par exemple à deux étages chacune, assurant chacune la compression d'un gaz de procédé, comme représenté sur les figures 4 et 5.

Dans ce cas, dans un exemple de réalisation représenté sur la figure 4, on prévoit, dans l'enveloppe, deux entrées E'1 et E'2 et deux sorties S'1 et S'2 de sorte que l'entrée E'2 de la deuxième section se situe au voisinage de la sortie S'1 de la première section. Ainsi, dans ce cas, comme visible sur la figure 4, le premier étage de compression de l'une des sections S2 est disposé en regard du deuxième étage de compression de l'autre section S1.

Au contraire, comme visible sur la figure 5, pour une configuration connue sous l'appellation "Back to Back", les premiers étages de compression de chacune des sections S1 et S2 peuvent être disposés côte à côte. Dans ce cas, les sorties S'1 et S'2 de ces étages de compression sont disposées côte à côte, et les entrées E'1 et E'2 sont disposées à l'opposé l'une de l'autre.

On notera enfin, comme visible sur la figure 6, que l'invention s'applique également à un agencement dans lequel on utilise, disposés dans une enveloppe commune, un moteur 50 et deux groupes compresseurs G1 et G2 pourvus chacun d'étages respectifs de compression S3, S4, S5 et S6, et S'3, S'4, S'5 et S'6 montés chacun sur un arbre mené 54 et 54', respectivement, ces arbres étant fixés à deux extrémités mutuellement opposées du rotor 52 en utilisant des accouplements flexibles 58 et 58'.

Bien entendu, cet agencement à deux groupes de compression peut utiliser l'un ou l'autre des agencements décrits précédemment en référence aux figures 4 et 5.

Dans ces différents modes de réalisation, on utilise des moyens de refroidissement du moteur et des paliers utilisant des flux de gaz de refroidissement en parallèle.

Comme on le conçoit, l'invention qui vient d'être décrite ne nécessite pas de prévoir des fluides de réfrigération séparés du moteur et des paliers. En outre, on réalise un refroidissement autonome du moteur électrique, des paliers et de la butée magnétique avec distribution du débit nécessaire à chacun d'eux, ces différents flux étant ensuite collectés pour être réinjectés en entrée du premier étage de compression.

Ces caractéristiques permettent de minimiser la taille de la machine et de simplifier l'installation. En outre, la réalisation de conduits internes permet de limiter l'encombrement des canalisations externes.

On notera également que l'invention qui vient d'être décrite permet de limiter les fuites de gaz vers l'extérieur. On améliore en outre la fiabilité dans la mesure où l'on prévoit une filtration intégrée du gaz de refroidissement du moteur. Par ailleurs, l'utilisation de plusieurs cartouches de filtration disposées en parallèle associées à un ensemble de vannes permet un changement en marche de ces cartouches.

Enfin, l'invention n'est pas limitée aux modes de réalisations décrits.

En effet, dans la description faite précédemment, les moyens de filtrage sont ménagés sous la forme de cartouches montées sur les conduites externes. Il est également possible, en variante, de monter les cartouches à l'intérieur du carter du groupe compresseur, à un emplacement les rendant aisément accessibles, en l'espèce, par exemple dans la cavité 95 permettant d'accéder à l'accouplement, de préférence en les montant sur le moyen d'obturation.

## Revendications

1. Groupe compresseur centrifuge, du type comprenant un moyen moteur (50) entraînant en rotation un rotor (52) et au moins un compresseur comprenant un corps statorique et un ensemble de roues à aubes (56) montées sur un arbre mené entraîné en rotation par le rotor dans le corps statorique, l'ensemble constitué par le moteur et au moins un compresseur étant monté dans un carter (86) commun étanche au gaz manipulé par le groupe compresseur, le groupe compresseur comportant en outre un ensemble de paliers actifs (60, 62, 64, 66, 67) de guidage axial et radial du rotor et de l'arbre mené, et des moyens de refroidissement du moyen moteur et des paliers de guidage par prélèvement du gaz manipulé par le compresseur en sortie d'un premier étage de compression (56), permettant le passage dudit gaz à travers le moyen moteur (50) et à travers les paliers et réinjection du gaz en entrée du compresseur, les moyens de refroidissement comportant en outre un ensemble de canalisations externes (80-1, 80-2, 80-3, 80-4, 80-5, 80-6) recueillant le gaz en sortie d'un étage de compression, le flux de gaz de refroidissement dans le moyen moteur (50) étant distinct du flux de gaz de refroidissement dans les paliers (60, 62, 64, 66), **caractérisé en ce que** les canalisations externes (80-1, 80-2, 80-3, 80-4, 80-5, 80-6) alimentent en parallèle des conduits internes radiaux (88, 92, 94, 104) d'alimentation du moyen moteur (50) et des paliers en gaz de refroidissement (60, 62, 64, 66, 67) disposés dans le groupe compresseur, les flux de gaz de refroidissement des paliers (60, 62) et du moteur (50) convergeant dans une cavité (95) où ils sont récupérés par un canal central globalement longitudinal (88) et amenés dans une conduite d'amenée (68) en amont du premier étage de compression (56)

2. Groupe compresseur centrifuge selon la revendication 1, **caractérisé en ce que** les moyens de refroidissement sont équipés de moyens de filtrage (82) du gaz manipulé par le compresseur.

3. Groupe compresseur centrifuge selon l'une quelconque des revendications 1 ou 2, **caractérisé en ce que** l'arbre mené du compresseur est supporté par deux paliers radiaux (64,66) d'extrémité, les moyens de refroidissement comportent un conduit axial (104) s'étendant d'un palier à l'autre et alimenté à l'une de ses extrémités par les canalisations externes, ledit conduit axial s'étendant globalement longitudinalement de manière radialement externe dans le compresseur.

4. Groupe compresseur centrifuge selon l'une quelconque des revendications 1 à 3, **caractérisé en ce que** les conduits internes d'alimentation des paliers comportent un ensemble de conduits orientés (94) de manière radialement externe dans le compresseur et alimentant chacun un palier.

5. Groupe compresseur centrifuge selon l'une quelconque des revendications 1 à 4, **caractérisé en ce que** le moteur est alimenté en gaz de refroidissement par l'intermédiaire d'un orifice (92) ménagé dans un couvercle d'extrémité (90) et en communication avec une canalisation externe.

6. Groupe compresseur centrifuge selon la revendication 5, dépendante de la revendication 4, **caractérisé en ce que** le flux de gaz de refroidissement est mélangé au flux de gaz de refroidissement en sortie des paliers refroidis par le gaz issu des conduits internes.

7. Groupe compresseur centrifuge selon l'une quelconque des revendications 1 à 6, **caractérisé en ce qu'**il comporte des moyens (105) de réglage du débit de réfrigération d'une part pour le moteur et, d'autre part, pour chaque palier.

8. Groupe compresseur centrifuge selon l'une quelconque des revendications 1 à 7, **caractérisé en ce qu'**il comporte des moyens (108) de collecte de flux de gaz de refroidissement d'organes situés du côté d'un piston d'équilibrage (107).

## Patentansprüche

1. Motorradialverdichtereinheit des Typs mit einem Antriebsmittel (50), das einen Rotor (52) rotiert, und mindestens einen Verdichter, der einen Statorkörper und eine Gruppe Schaufelräder (56), die auf einer angetriebenen Welle angebracht sind, welche von dem Rotor in dem Statorkörper rotiert wird, aufweist, wobei das Ganze aus dem Motor und mindestens einem Verdichter besteht, die in einem gemeinsamen Gehäuse (86) montiert sind, welches gasdicht ausgeführt ist gegenüber dem Gas, das von der Verdichtereinheit behandelt wird, wobei die Verdichtereinheit zusätzlich eine Gruppe aktiver Schaufeln (60, 62, 64, 66, 67) für die axiale und radiale Führung des Motors und der angetriebenen Welle aufweist sowie Kühlmittel des Antriebsmittels und Lager zum Führen durch Entfernen des Gases, das von dem Verdichter am Auslass einer ersten Verdichterstufe (56) behandelt wird, was den Strom des Gases durch das Antriebsmittel (50) und durch die Lager und die Rückführung des Gases am Einlass des Verdichters ermöglicht, wobei das Kühlmittel außerdem eine Gruppe externer Rohre (80-1, 80-2, 80-3, 80-4, 80-5, 80-6) aufweist, die das Gas am Auslass einer Verdichterstufe sammeln, wobei der Kühlgasstrom in dem Antriebsmittel (50) sich von dem Kühlgasstrom in den Lagern (60, 62, 64, 66) unterscheidet, **dadurch gekennzeichnet, dass** die externen Rohre (80-1, 80-2, 80-3, 80-4, 80-5, 80-6) in parallele radiale Innenkanäle (88, 92, 94, 104) speisen, um das Antriebsmittel (50) und Lager mit dem Kühlgas (60, 62, 64, 66, 67) zu speisen, welches in der Verdichtergruppe angeordnet ist, wobei die Kühlgasströme der Lager (60, 62) und des Motors (50) in einem Hohlraum (95) zusammentreffen, in dem sie insgesamt von einem Längsmittenkanal (88) rückgeführt werden und in einen Versorgungskanal (68) oberhalb der ersten Verdichterstufe (56) geleitet werden.

2. Motorradialverdichtereinheit nach Anspruch 1,
**dadurch gekennzeichnet, dass** die Kühlmittel mit Filtermitteln (82) für das von dem Verdichter behandelten Gases versehen sind.

3. Motorradialverdichtereinheit nach einem der Ansprüche 1 oder 2, **dadurch gekennzeichnet, dass** die angetriebene Welle des Verdichters von zwei Endradiallagern (64, 66) gestützt wird, das Kühlmittel weist einen Axialkanal (104) auf, der sich von einem Lager zum anderen erstreckt und der an einem seiner Enden von den externen Rohren gespeist wird, wobei der Axialkanal sich insgesamt in Längsrichtung radial außen im Verdichter erstreckt.

4. Motorradialverdichtereinheit nach einem der Ansprüche 1 bis 3, **dadurch gekennzeichnet, dass** die inneren Versorgungskanäle der Lager eine Gruppe von Kanälen (94) aufweisen, die extern radial im Kompressor ausgerichtet sind und wobei jeder ein Lager versorgt.

5. Motorradialverdichtereinheit nach einem der Ansprüche 1 bis 4, **dadurch gekennzeichnet, dass** der Motor über eine Öffnung (92), die in einer Endabdeckung (90) vorgesehen ist und die in Verbindung mit einem äußeren Rohr steht, mit Kühlgas gespeist wird.

6. Motorradialverdichtereinheit nach Anspruch 5, der von Anspruch 4 abhängig ist, **dadurch gekennzeichnet, dass** der Kühlgasstrom mit dem Kühlgasstrom am Auslass der Lager, die von dem Gas, das aus den internen Kanälen stammt, gekühlt werden, vermischt wird.

7. Motorradialverdichtereinheit nach einem der Ansprüche 1 bis 6, **dadurch gekennzeichnet, dass** sie Mittel (105) zum Steuern des Kühlstroms einerseits für den Motor und andererseits für jedes Lager aufweist.

8. Motorradialverdichtereinheit nach einem der Ansprüche 1 bis 7, **dadurch gekennzeichnet, dass** es Mittel (108) zum Sammeln der Kühlgasströme von Vorrichtungen aufweist, die sich auf der Seite eines Gleichgewichtskolbens (107) befinden.

## Claims

1. Centrifugal compressor unit of the type including a motor means (50) rotating a rotor (52) and at least one compressor including a stator body and a set of vane wheels (56) mounted on a driven shaft rotated by the rotor in the stator body, the whole consisting of the motor and at least one compressor being mounted in a common casing (86) which is gas-tight with respect to the gas handled by the compressor unit, the compressor unit comprising, in addition, a set of active bearings (60, 62, 64, 66, 67) for the axial and radial guiding of the motor and of the driven shaft, and cooling means of the motor means and bearings for guiding by removal of the gas handled by the compressor at the outlet of a first compression stage (56), allowing the passage of said gas through the motor means (50) and through the bearings and reinjection of the gas at the inlet of the compressor, the cooling means comprising, in addition, a set of external pipes (80-1, 80-2, 80-3, 80-4, 80-5, 80-6) collecting the gas at the outlet of a compression stage, the cooling gas flow in the motor means (50) being different from the cooling gas flow in the bearings (60, 62, 64, 66), **characterized in that** the external pipes (80-1, 80-2, 80-3, 80-4, 80-5, 80-6) supply in parallel radial internal ducts (88, 92, 94, 104) for supplying the motor means (50) and bearings with the cooling gas (60, 62, 64, 66, 67) arranged in the compressor group, the cooling gas flows of the bearings (60, 62) and of the motor (50) converging in a cavity (95) where they are recovered by an overall longitudinal central channel (88) and conveyed in a supply duct (68) upstream of the first compression stage (56).

2. Centrifugal compressor unit according to Claim 1, **characterized in that** the cooling means are provided with filtering means (82) for the gas handled by the compressor.

3. Centrifugal compressor unit according to any one of Claims 1 or 2, **characterized in that** the driven shaft of the compressor is supported by two end radial bearings (64, 66), the cooling means comprise an axial duct (104) extending from one bearing to the other and supplied at one of its ends by the external pipes, said axial duct extending overall longitudinally in a radially external manner in the compressor.

4. Centrifugal compressor unit according to any one of Claims 1 to 3, **characterized in that** the internal supply ducts of the bearings comprise a set of ducts (94) oriented in an externally radial manner in the compressor and each supplying one bearing.

5. Centrifugal compressor unit according to any one of Claims 1 to 4, **characterized in that** the motor is supplied with cooling gas via an opening (92) provided in an end cover (90) and in communication with an external pipe.

6. Centrifugal compressor unit according to Claim 5, which is dependent on Claim 4, **characterized in that** the cooling gas flow is mixed with the cooling gas flow at the outlet of the bearings cooled by the gas originating from the internal ducts.

7. Centrifugal compressor unit according to any one of Claims 1 to 6, **characterized in that** it comprises means (105) for regulating the cooling flow for the motor, on one hand, and for each bearing, on the other hand.

8. Centrifugal compressor unit according to any one of Claims 1 to 7, **characterized in that** it comprises means (108) for the collection of cooling gas flows of devices situated on the side of an equilibration piston (107).
